# FASCICULE DE BREVET EUROPEEN

(11) **EP 3 776 686 B1**
(45) Date de publication et mention de la délivrance du brevet: **12.01.2022**
(21) Numéro de dépôt: 19716885.9
(22) Date de dépôt: 08.04.2019
(51) Int. Cl.: H01M 50/20

(54) **UNITE DE BATTERIE INTEGRANT DES ZONES D'ECHANGES THERMIQUES**
BATTERIEEINHEIT MIT INTEGRIERTEN WÄRMETAUSCHZONEN
BATTERY UNIT WITH INTEGRATED HEAT EXCHANGE ZONES

(30) Priorité: 10.04.2018 FR 1853131
(43) Date de publication de la demande: 17.02.2021
(73) Titulaire: Sogefi Air & Cooling (SAS), 78280 Guyancourt (FR)
(72) Inventeur: BECKER, Nicolas, 68320 PORTE-DU-RIED (FR); FLORANC, Alexandre, 68280 LOGELHEIM (FR)
(74) Mandataire: Cabinet Nuss
(86) Numéro de dépôt international: PCT/EP2019/058808
(87) Numéro de publication internationale: WO 2019/197338

(56) Documents cités:
- EP-A1- 2 908 377
- DE-A1-102012 012 663
- DE-A1-102013 011 895

## Description

La présente invention concerne le domaine des sources d'énergie électriques autonomes, en particulier celles embarquées dans des véhicules automobiles, et a pour objet une unité de batterie et un véhicule automobile hybride ou électrique comportant au moins une telle unité.

Les véhicules hybrides/électriques sont équipés d'une batterie permettant de stocker l'énergie électrique nécessaire à leur fonctionnement. Les enjeux actuels nécessitent d'optimiser la conception des unités de batterie aussi dénommées « packs batteries », afin d'en tirer les meilleures performances en terme de durée de vie (charge/décharge) et d'autonomie de roulage. Le temps de charge est également un facteur important dans l'utilisation quotidienne de ces packs batteries.

Les batteries mises en œuvre ont idéalement besoin de fonctionner à des températures entre 10° C et 30° C, en particulier les batteries à haute densité de stockage, du type par exemple Li-ion ou Li-polymère. Une température trop basse impacte l'autonomie et une température trop élevée impacte la durée de vie des batteries. Il est donc nécessaire de réguler au mieux la température des batteries.

Dans le cadre des applications embarquées sur véhicules, il existe des solutions de batteries refroidies par air mais l'échange thermique reste assez limité. La tendance actuelle est d'utiliser un fluide caloporteur afin d'améliorer les échanges thermiques et d'augmenter l'efficacité de la régulation.

De plus, les logements de réception de ces batteries peuvent être réalisés directement par une partie du véhicule ou consister en des cavités formées dans une pièce structurelle de ce véhicule. Toutefois, ces solutions sont très peu flexibles en termes d'implantation et rendent difficiles la maintenance. Les solutions de packs batteries autonomes et non intégrées dans la structure du véhicule sont de ce fait à privilégier.

De nombreuses conceptions existent dans l'état de la technique : elles utilisent des solutions métalliques (acier, aluminium, etc.) avec une distribution de fluide caloporteur par durites jusqu'à des plaques de refroidissement assemblées et disposées à l'intérieur du pack batterie, sur lesquelles reposent les modules regroupant les cellules ou éléments de la batterie.

Il en résulte une construction complexe, formée par l'assemblage d'un nombre important de pièces, nécessitant la réalisation de nombreux raccordements étanches lors de la fabrication (dont la tenue au vieillissement peut être problématique) et constituant une structure encombrante, multicomposante. DE 102013011895 A1, DE 102012012663 A1 et EP 2908377 A1 décrivent une unité de batterie pour une pluralité de cellules qui sont logées dans un boîtier comprenant un fond sur lequel reposent lesdites cellules en contact thermique avec une première plaque à haute conductivité thermique délimitant un circuit de refroidissement.

De plus, le boîtier de l'unité de batterie étant réalisé en métal (préférentiellement de l'aluminium), il ne peut isoler thermiquement et électriquement le pack batterie vers l'extérieur, présente de plus un prix de revient élevé et est en outre sujet à la corrosion.

La présente invention a pour but de surmonter au moins les principales limitations précitées.

A cet effet, l'invention a pour objet une unité de batterie, notamment pour véhicule automobile hybride et/ou électrique, comprenant essentiellement, d'une part, une pluralité de cellules ou d'éléments de batterie, le cas échéant regroupé(e)s physiquement et/ou électriquement en plusieurs blocs ou modules, d'autre part, un boîtier logeant et entourant lesdit(e)s cellules ou éléments et, enfin, des moyens de régulation de la température desdit(e)s cellules ou éléments par circulation de fluide caloporteur FC,
unité de batterie caractérisée en ce que le boîtier comporte, au moins au niveau d'une région de fond sur laquelle reposent les cellules, au moins une, préférentiellement plusieurs, zone(s) d'échange thermique entre lesdites cellules et le fluide caloporteur, ladite ou lesdites zone(s) étant intégrée(s) dans la structure dudit boîtier, préférentiellement dans la paroi de ce dernier.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1A et 1B sont des vues en perspective selon deux angles différents d'une unité de batterie selon l'invention, avec un boîtier parallélépipédique rectangle formé par l'assemblage d'un bac inférieur et d'un couvercle ;
la figure 2 est une vue en perspective similaire à celle de la figure 1A, le couvercle étant enlevé ;
la figure 3 est une vue totale en coupe de l'unité de batterie représentée figures 1 et 2 ;
la figure 4 est une représentation d'une partie de la représentation de la figure 3 à une échelle différente ;
la figure 5 est une représentation d'une partie de la représentation de la figure 4 à une échelle différente ;
la figure 6 est une vue schématique en coupe d'un bac inférieur équipé de batterie selon un autre mode de réalisation de l'unité de batterie de l'invention ;
la figure 7 est une vue schématique en coupe d'une unité de batterie selon un autre mode de réalisation de l'unité de batterie de l'invention ;
la figure 8A est une vue similaire à celle de la figure 2, les cellules ou éléments de batterie étant enlevés et seul le bac inférieur étant représenté ;
la figure 8B est une vue similaire à celle de la figure 8A illustrant une autre variante de réalisation du bac, les cellules étant enlevées et un cadre de renfort étant rapporté sur le bac ;
la figure 9 est une vue en perspective de dessous d'une unité de batterie représentée figures 1A et 1B ;
la figure 10 est une vue à une échelle différente d'un détail de la figure 9 ;
la figure 11 est une vue similaire à celle de la figure 8 après enlèvement d'une plaquette thermiquement conductrice ou à conductivité thermique élevée d'une zone d'échange thermique intégrée au bac inférieur ;
la figure 12 est une vue d'un détail (renfoncement de la zone d'échange thermique dont la plaquette conductrice a été enlevée) de la figure 11, à une échelle différente ;
la figure 13 est une vue en perspective de dessous d'une plaquette à conductivité thermique élevée d'une zone d'échange thermique ;
les figures 14 à 16 sont des vues respectivement identiques aux figures 1A, 1B et 1C illustrant la circulation du fluide caloporteur dans les conduits d'alimentation et d'évacuation (figures 14 et 15), dans les lignes de piquage (figure 15) et dans le volume interne d'une zone d'échange thermique formant portion de circuit élémentaire en U (figure 16) ;
la figure 17 est une vue partielle en coupe transversale de l'unité de batterie représentée figures 1A et 1B, illustrant la circulation du fluide caloporteur dans les conduits d'alimentation/évacuation, les lignes de piquage et les zones d'échange thermique, et
la figure 18 est une vue similaire à la figure 1A montrant également un cadre de renfort destiné à venir s'emboîter autour et dans le bac inférieur du boîtier de l'unité de batterie.

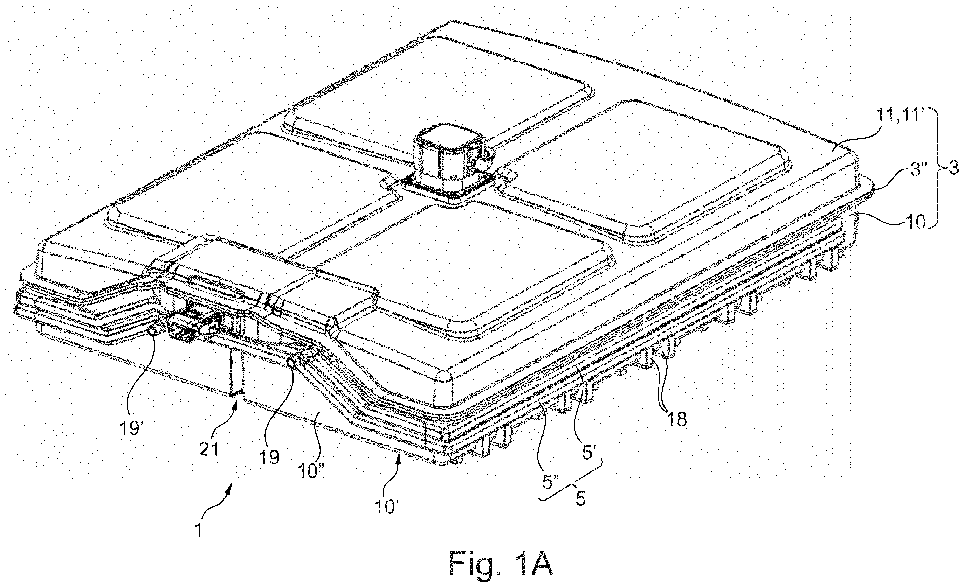

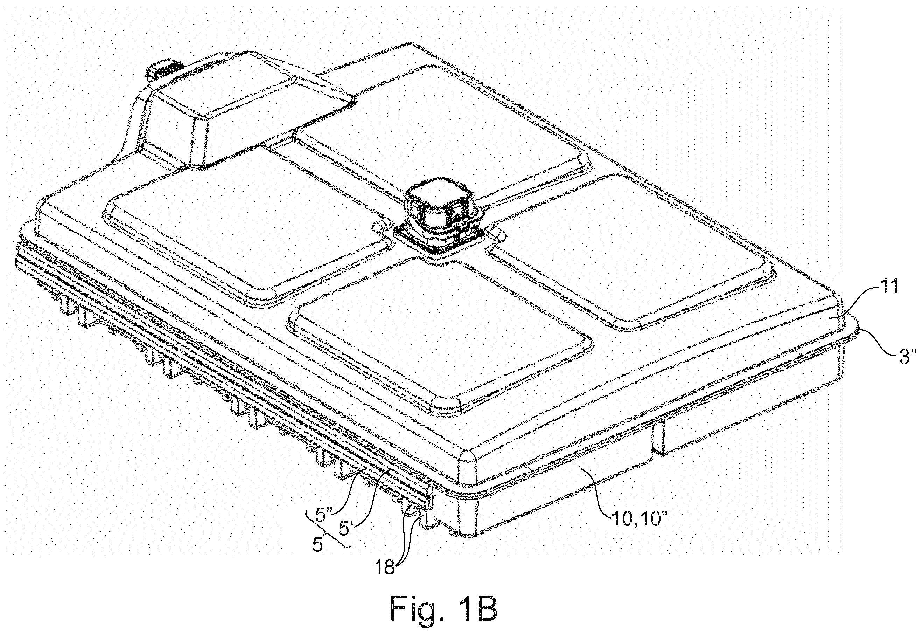

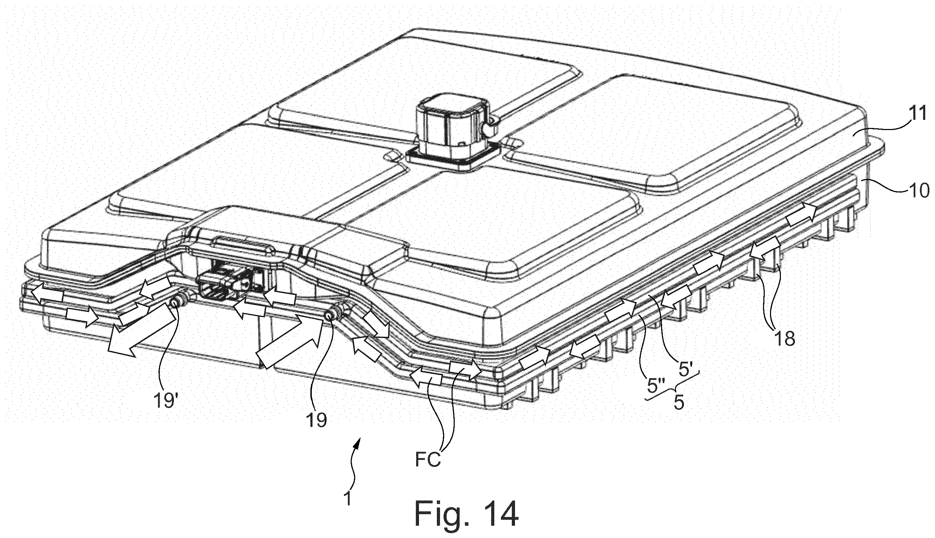

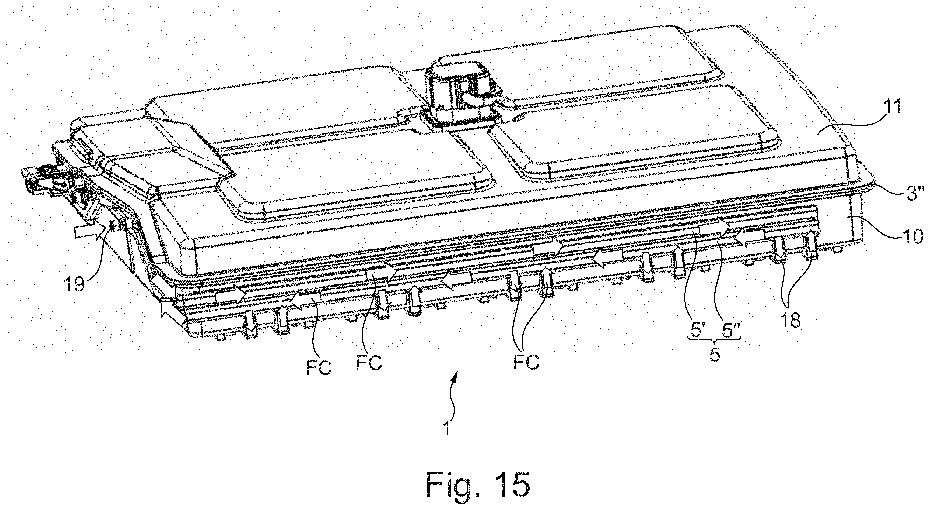

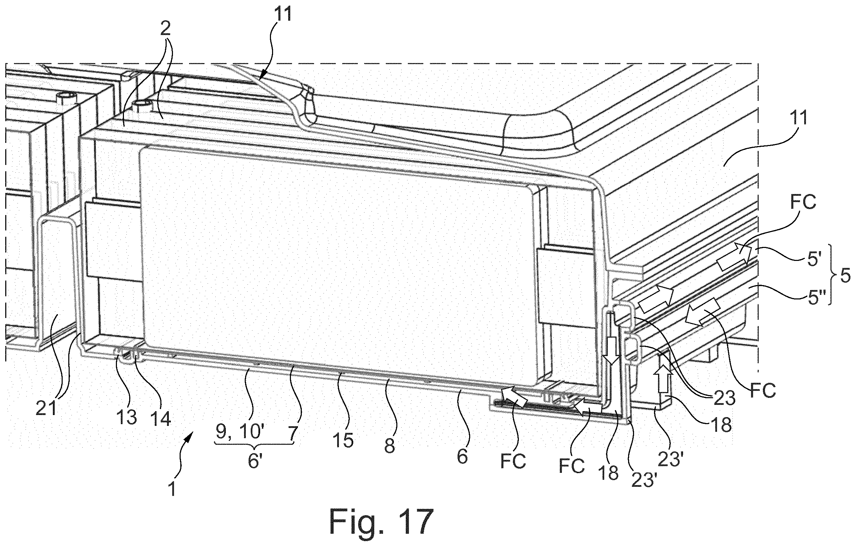

Les figures 1, 3, 7, 14, 15 et 17 notamment montrent une unité de batterie 1, notamment pour véhicule automobile hybride et/ou électrique, comprenant essentiellement, d'une part, une pluralité de cellules 2 ou d'éléments de batterie, le cas échéant regroupé(e)s physiquement et/ou électriquement en plusieurs blocs ou modules 2', d'autre part, un boîtier 3 logeant et entourant lesdit(e)s cellules ou éléments 2 et, enfin, des moyens 4, 5 de régulation de la température desdit(e)s cellules ou éléments 2 par circulation de fluide caloporteur FC.

Conformément à l'invention, le boîtier 3 comporte, au moins au niveau d'une région de fond 6 sur laquelle reposent les cellules 2, au moins une, préférentiellement plusieurs, zone(s) 6' d'échange thermique entre lesdites cellules 2 et le fluide caloporteur FC, ladite ou lesdites zone(s) 6' étant intégrée(s) dans la structure dudit boîtier 3, préférentiellement dans la paroi 3' de ce dernier.

Ainsi, du fait de l'intégration d'une partie au moins des moyens 4, 5 de régulation en température (ici au moins les zones d'échange thermique 6') dans la structure même du boîtier 3, on aboutit à une construction compacte (volume intérieur maximum, volume extérieur minimal), avec un nombre limité de pièces et de parties à assembler (seules les parties constitutives 10, 11 du boîtier 3 doivent être mutuellement solidarisées, la ou les zones 6' d'échange thermique étant incorporée(s) dans lesdites parties de boîtier 3).

Préférentiellement, la ou chaque zone d'échange 6' comprend un élément surfacique 7 à conductivité thermique élevée en contact avec des cellules 2, d'une part, et le fluide caloporteur FC, d'autre part, un élément surfacique 7 étant le cas échéant associé aux cellules 2 d'un module 2'.

Les zones 6' d'échange thermique peuvent ainsi constituer des moyens de régulation de la température des cellules 2 qui non seulement sont incorporés dans la structure même du boîtier 3, mais peuvent également être organisés et segmentés en fonction de l'organisation et de l'éventuel regroupement des cellules 2 (en modules 2'), pour une efficacité de transfert thermique optimisé.

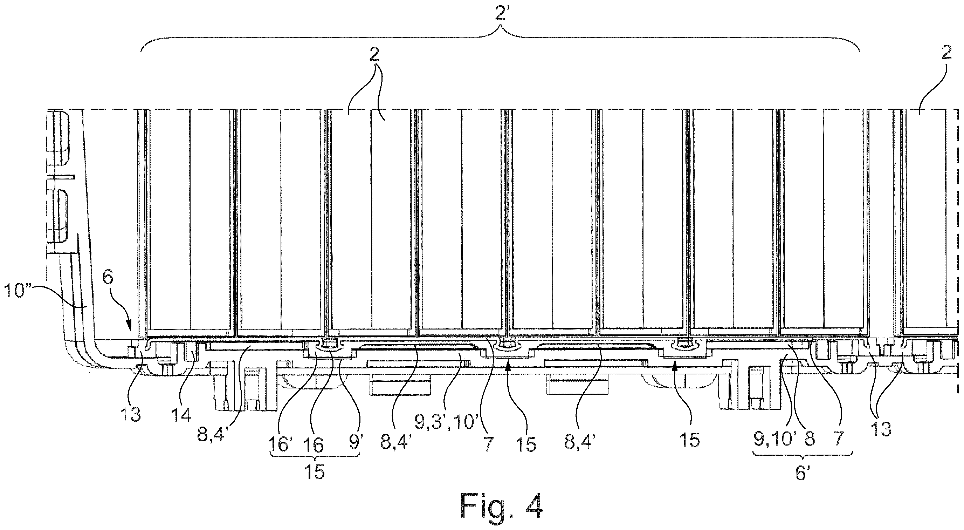

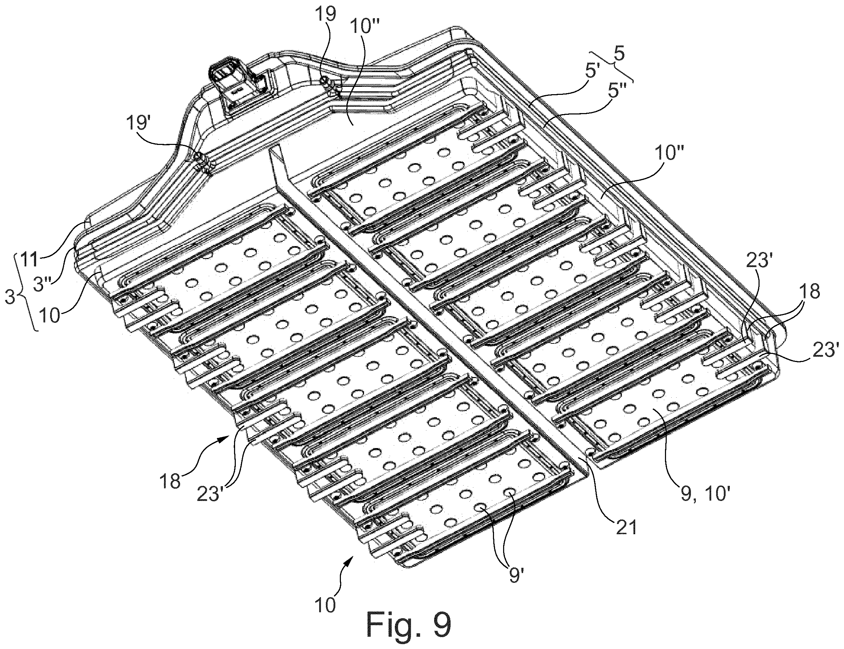

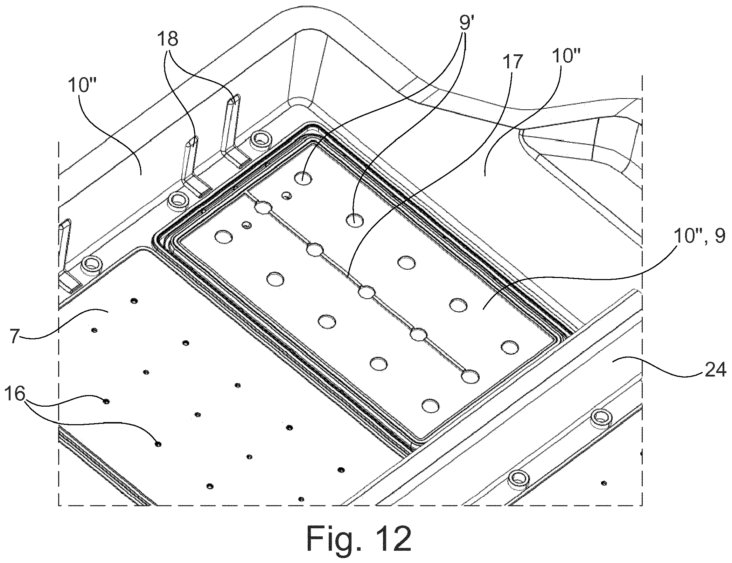

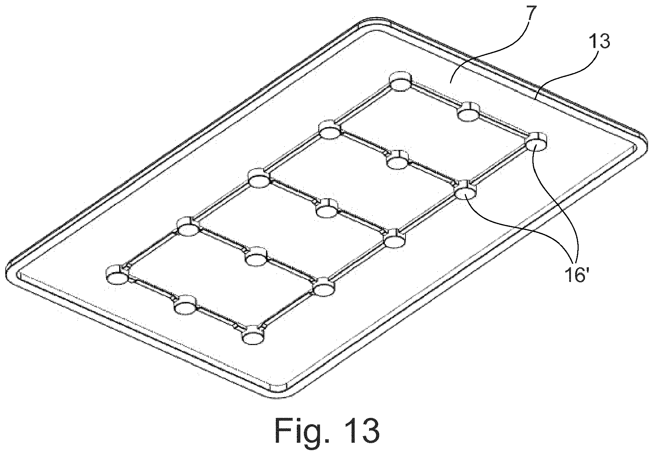

En accord avec une caractéristique constructive avantageuse de l'invention, ressortant notamment des figures 4 à 13 et 17, la ou chaque zone d'échange 6' comprend un volume 8 de circulation de fluide caloporteur FC, défini entre un élément surfacique 7 à conductivité thermique élevée, en contact direct avec des cellules 2, et un élément surfacique 9 à faible conductivité thermique, le cas échéant en contact avec le milieu extérieur.

Ainsi, l'échange thermique avec le fluide FC du volume 8 est extrêmement favorisé au niveau de l'élément surfacique 7 et au contraire réduit au maximum au niveau de l'élément surfacique 9 complémentaire.

Une conductivité thermique élevée, et plus généralement un bon transfert thermique entre le fluide FC et les cellules 2, peut être atteinte en utilisant un matériau intrinsèquement bon conducteur thermique et utilisé en faible épaisseur, en relation avec une surface de contact maximale et une qualité de contact optimisée entre l'élément surfacique 7 et les cellules 2, le cas échéant du module 2' concerné.

La faible conductivité thermique quant à elle peut être atteinte en utilisant un matériau faiblement conducteur thermique, voire isolant thermiquement, en combinaison avec une épaisseur relativement importante de la paroi de l'élément surfacique 9.

Typiquement, on entend dans la présente par conductivité thermique λ élevée, des valeurs de λ telles que λ > 50 W.m⁻¹.K⁻¹, préférentiellement λ > 100 W.m⁻¹.K⁻¹ et par faible conductivité thermique λ, des valeurs des λ telles que λ < 1 W.m⁻¹.K⁻¹, préférentiellement λ < 0,5 W.m⁻¹.K⁻¹.

Selon un mode de réalisation avantageux de l'invention, l'élément surfacique 7 à conductivité thermique élevée est un élément rapporté dans le boîtier 3, et consiste avantageusement en une plaquette métallique, ou en un matériau rigide et bon conducteur thermique analogue, solidarisée de manière étanche aux liquides avec un élément surfacique 9 à faible conductivité thermique.

Le matériau de l'élément surfacique 7, préférentiellement de l'aluminium, peut également être non métallique, et par exemple consister en un matériau thermoplastique ou thermodur, chargé en additif pour augmenter sa conductivité thermique.

L'élément surfacique 7 peut, en variante, également être de nature souple ou flexible pour s'adapter et rattraper les défauts de planéité des modules 2', tout en étant bon conducteur thermique (élément 7 en silicone par exemple, préférentiellement chargé).

La ou chaque plaquette 7 thermiquement conductrice, outre un échange de chaleur optimisé avec les cellules 2 (éventuellement seulement du module 2' qui lui est affecté), devra délimiter de manière étanche un volume élémentaire 8 de circulation de fluide FC en relation avec un élément surfacique 9, et résister aux déformations induites par les variations de température, afin de conserver en permanence un contact surfacique optimal avec les cellules 2. Sa solidarisation et son assemblage avec le boîtier 3 et avec l'élément surfacique 9 appairé sont donc avantageusement à la fois périphériques et, au moins ponctuellement, répartis sur sa surface.

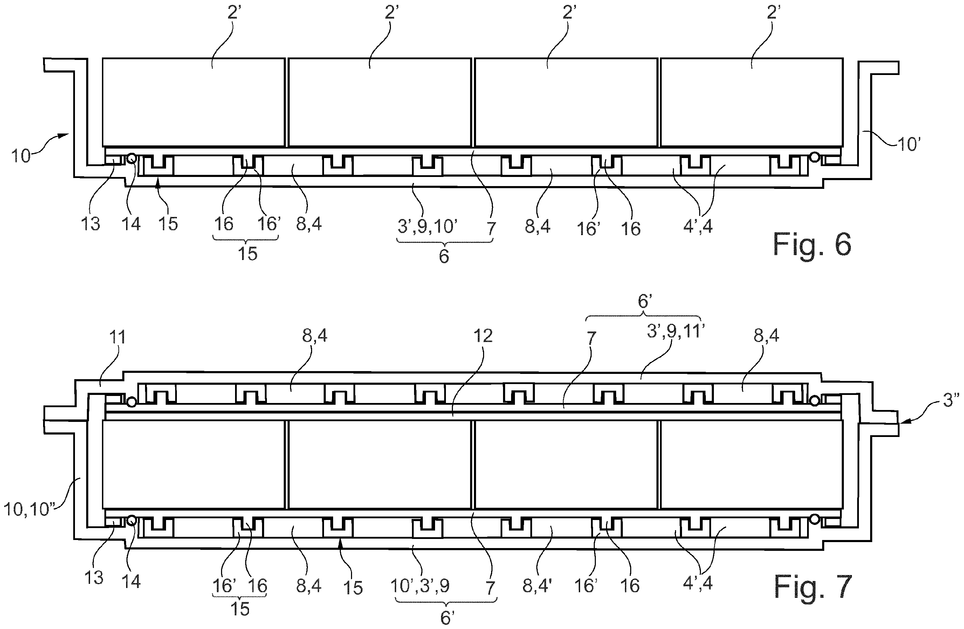

Comme le montrent schématiquement les figures 6 et 7, le boîtier 3 peut ne comporter qu'une seule zone 6' d'échange thermique (uniquement dans le bac inférieur 10 - figure 6) ou une unique zone 6' d'échange thermique dans chacune de ses parties constitutives (par exemple une zone 6' dans le bac inférieur 10 et une zone 6' dans le couvercle 11 - figure 7).

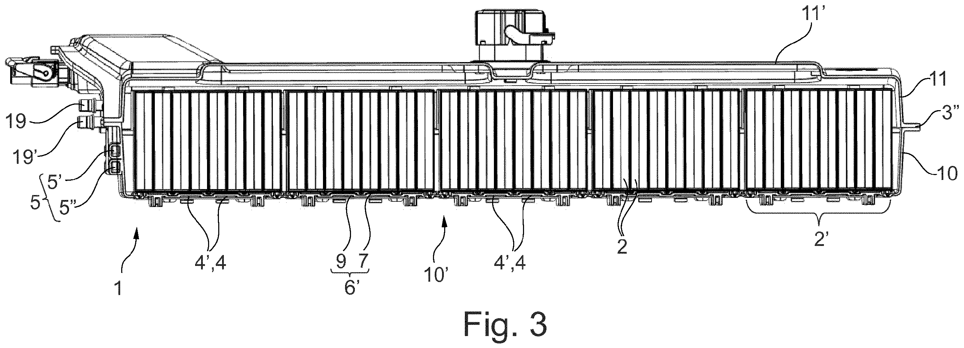

Toutefois, de manière préférée, le boîtier 3 comporte une pluralité de zones 6' d'échange thermique dans une, plusieurs ou chacune de ses parties constitutives (bac 10, couvercle 11), chaque zone 6' étant avantageusement affectée à un module 2' (cf. figures 3, 4, 8, 9, 11 et 16).

Conformément à une autre caractéristique constructive avantageuse, l'élément surfacique 9 à faible conductivité thermique de la ou de chaque zone d'échange 6' fait partie intégrante du boîtier 3 et constitue avantageusement une portion de la paroi 3' de ce dernier.

Ainsi, les éléments surfaciques 7 et 9 constituent, par coopération, des régions de paroi 3' à structure en double paroi du boîtier 3, ces régions de paroi à double peau correspondant aux zones 6' d'échange thermique et renfermant les volumes 8 de circulation de fluide caloporteur FC intégrés.

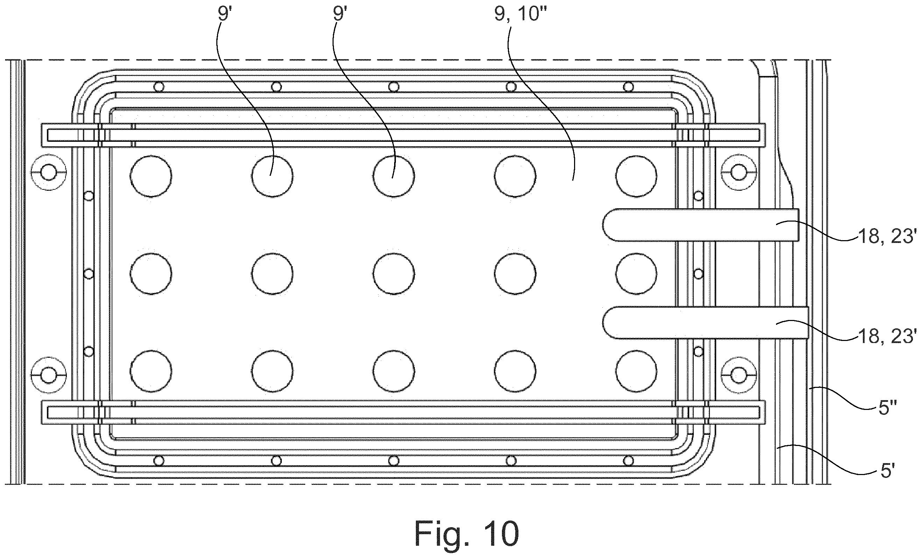

Avantageusement, et comme le montrent par exemple les figures 10 à 12 et 15 à 17, les volumes de circulation 8 de la ou des différentes zone(s) d'échange thermique 6' forment des portions d'un ou de plusieurs circuit(s) 4 de circulation de fluide caloporteur FC, intégré(s) dans la structure du boîtier 3, lesdites portions de circuit 4 étant reliées fluidiquement en série, ou non, et raccordées à des conduits 5', 5" de distribution/collecte faisant partie d'un circuit 5 d'alimentation/évacuation de fluide liquide caloporteur FC, ces circuits 4 et 5 constituant les moyens de régulation de la température des cellules 2.

En accord avec une variante constructive préférée de l'invention, ressortant notamment des figures 1, 3, 7, 14, 15 et 17, le boîtier 3 est réalisé en un matériau rigide à faible conductivité thermique, préférentiellement en plastique, et il est constitué, d'une part, par un bac inférieur 10, avec une paroi de fond 10' et des parois latérales 10", et par un couvercle supérieur 11, assemblés périphériquement, préférentiellement par vissage, et éventuellement avec interposition d'un joint d'étanchéité.

Une réalisation du boîtier 3 en un matériau plastique rigide (matière thermoplastique chargée ou non en additifs et/ou en fibres, par exemple polypropylène, polyamide, polyester, etc.) et en deux parties 10 et 11 assemblées périphériquement, permet d'aboutir simultanément (par rapport à des boîtiers métalliques) à une meilleure isolation thermique et à une réduction des coûts de revient, et autorise une grande variété et diversité de formes réalisables.

La zone d'assemblage étanche du bac 10 avec le couvercle 11 peut consister en une bande continue périphérique de contact 3" obtenue par appui sous pression des bords respectifs du bac et du couvercle, ou éventuellement par fusion de matière entre les bords en regard et à configurations complémentaires des deux parties 10 et 11 constitutives du boîtier 3.

Un assemblage amovible par vissage, clippage ou analogue sera préféré car il permet un démontage du couvercle 11 pour des opérations de test, de maintenance et de remplacement de cellule(s) 2, ou de module(s) 2'.

En outre, un joint de compression est, de manière connue, intercalé entre les deux bords en contact au niveau de la zone d'assemblage 3".

Selon une caractéristique de l'invention, il est prévu que le bac inférieur 10 présente des formations ou renfoncements dans sa paroi de fond 10', et éventuellement dans certaines au moins de ses parois latérales 10", ces formations ou renfoncements constituant chacun un élément surfacique 9 à faible conductivité thermique et formant, en coopération chacun avec un élément surfacique 7 à conductivité thermique élevée, en forme de plaquette et en contact avec des cellules 2, par exemple toutes les cellules 2 d'un module 2', des zones 6' d'échange thermique avec chacune un volume 8 de circulation de fluide caloporteur FC.

Ce bac 10 peut aussi, en variante et comme le montrent les figures 6 et 7, ne présenter qu'une seule plaque 7 et une seule zone 6' au niveau de sa région de fond 6.

Afin d'augmenter les possibilités de régulation des cellules, en augmentant les interfaces d'échange thermique et le pouvoir chauffant/réfrigérant disponible, il peut être prévu que le couvercle 11 également intègre, dans sa structure, une ou des zones 6' d'échange thermique entre au moins certaines des, préférentiellement toutes les, cellules 2 et le fluide caloporteur FC. La ou chaque zone d'échange thermique 6' du couvercle 11 peut comprendre un volume 8 de circulation de fluide caloporteur FC et être constituée par la coopération d'un(e) formation ou renfoncement de la paroi 11' du couvercle 11, constituant un élément surfacique 9 à faible conductivité thermique, avec un élément surfacique 7 à conductivité thermique élevée, en forme de plaquette et en contact avec des cellules 2, par exemple toutes les cellules 2 d'un module 2' (figures 3 et 7). La construction en double paroi du couvercle 11 peut ainsi être similaire à celle du bac 10.

Afin de pouvoir compenser les probables jeux d'assemblage des différentes parties 10, 11 du boîtier 3 pour ne pas obérer les performances de transfert thermique entre les cellules 2 et le fluide caloporteur FC, en particulier au niveau du couvercle 11, une plaque ou feuille 12 flexible et thermiquement conductrice est intercalée entre l'élément ou les éléments surfacique(s) 7 à conductivité thermique élevée de la ou des zone(s) 6' d'échange thermique intégrées dans le couvercle 11, dans le fond 6' du bac 6 et/ou dans les parois latérales 10" du bac 10, d'une part, et les faces concernées des cellules 2 des modules 2' en regard, d'autre part.

Le cas échéant, en variante, chaque élément surfacique 7 en forme de plaquette peut être revêtu d'une couche individuelle de matériau à conductivité thermique élevée, tel que par exemple du silicone chargé.

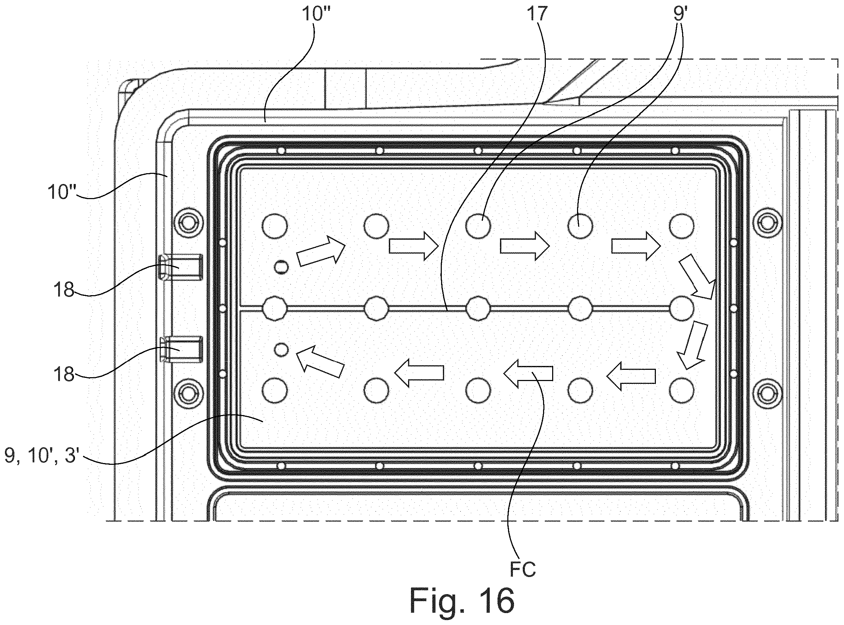

Comme le montre la figure 16, chaque zone d'échange thermique 6' comprend un volume 8 de circulation de fluide caloporteur FC formant une portion de circuit en forme de U ou en serpentin, dont les deux extrémités libres des deux branches sont reliées fluidiquement à des lignes 5, 5" de distribution/collecte faisant partie d'un circuit 5 d'alimentation/évacuation de fluide caloporteur FC.

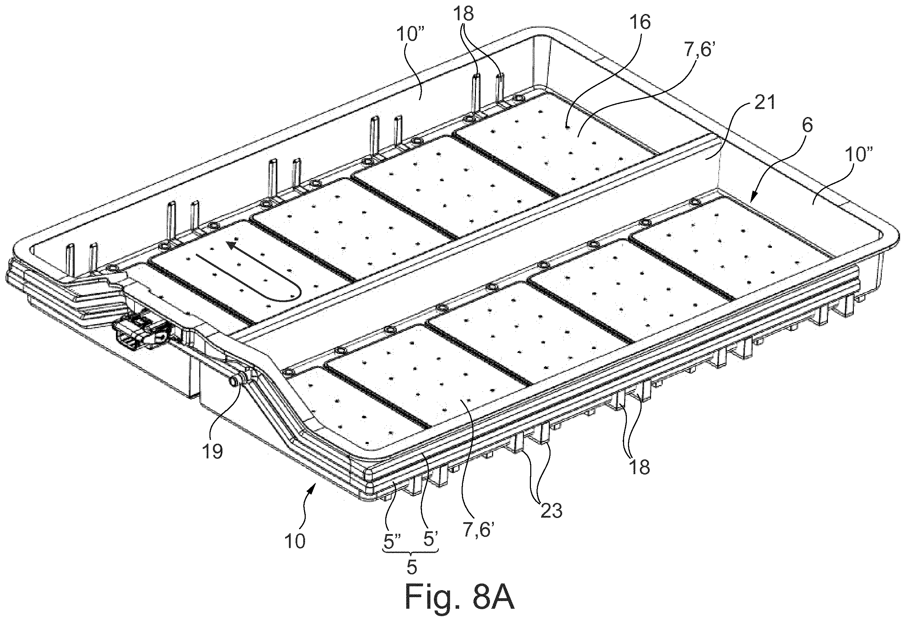

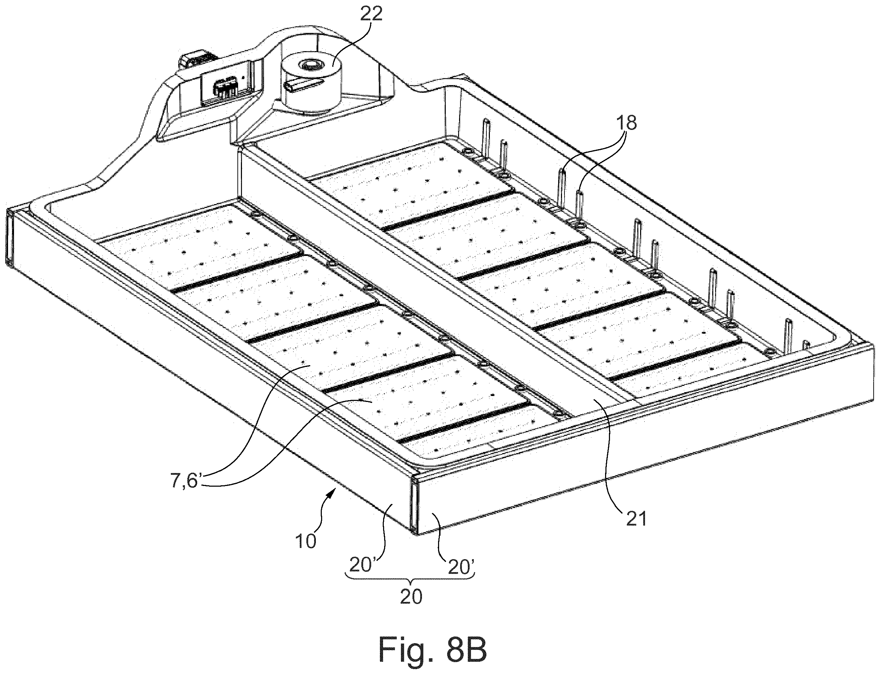

Les volumes 8 de circulation en U ou en serpentin (non représenté) sont tous reliés fluidiquement :
- soit individuellement en série et collectivement au circuit 5 (non représenté) ;
- soit individuellement et parallèlement à ce circuit 5 (figures 8 à 11 et 17).

Selon une première variante de réalisation de l'invention, chaque élément surfacique 7 à conductivité thermique élevée, en forme de plaquette, est solidarisé par accrochage mécanique avec la paroi 3' du boîtier 3, par exemple par bouterollage, par encliquetage, par sertissage, par vissage ou analogue, la portion de paroi 3' en regard de l'élément surfacique 7 constituant un élément surfacique 9 à faible conductivité thermique.

Selon une seconde variante de réalisation de l'invention, ressortant des figures 4, 5 et 11 à 13, chaque élément surfacique 7 à conductivité thermique élevée, en forme de plaquette, comporte une zone de bord formant cadre périphérique 13, d'un seul tenant ou rapporté par surmoulage, solidarisé par soudure avec la paroi 3' du boîtier 3, la portion de paroi 3' en regard de l'élément surfacique 7 constituant un élément surfacique 9 à faible conductivité thermique. Un tel cadre 13 permet notamment d'établir une liaison continue sur le pourtour, par soudure laser préférentiellement.

Avantageusement, un joint d'étanchéité 14 est présent, à l'état comprimé, entre les bords périphériques mutuellement solidarisés des deux éléments surfaciques 7 et 9 (en étant par exemple reçu dans une gorge du bac 10).

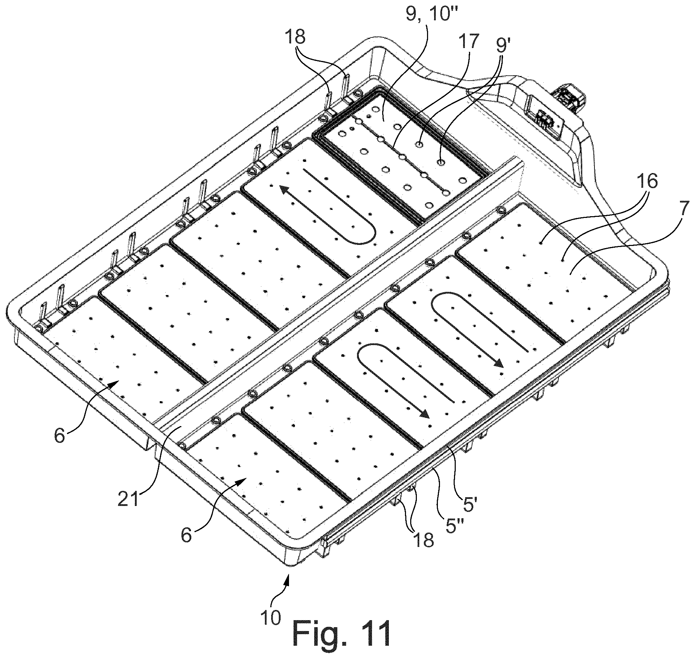

De manière préférée, et comme cela est illustré de manière exemplaire sur les figures 11 à 13, chaque élément surfacique 7 à conductivité thermique élevée en forme de plaquette est solidarisé avec la paroi 3' du boîtier 3, d'une part, périphériquement, préférentiellement continûment et par exemple par accrochage mécanique ou soudure, et, d'autre part, au niveau d'au moins une zone 15 de liaisonnement située à l'intérieur de la surface de ladite plaquette 7, avantageusement au niveau d'une pluralité de zones de liaisonnement 15 réparties sur la surface de ladite plaquette 7, préférentiellement régulièrement.

Ainsi, en plus d'une fixation périphérique, la ou chaque plaquette 7 est également solidarisée rigidement en une pluralité de points ou de zones 15 dispersé(e)s. Il en résulte une fixation répartie qui évite toute déformation de la ou des plaquette(s) 7 sous l'effet de la chaleur, et également sous l'effet du poids des cellules 2 (pour les plaquettes 7 du bac 10 - les zones 15 formant également des points d'appui), permettant d'assurer dans le temps un contact surfacique optimal entre plaquette(s) 7 et cellules 2.

De ce fait, chaque plaquette 7 est solidarisée périphériquement le long de son contour (éventuellement de manière continue) et à l'intérieur de ce contour (localement par points par exemple) favorisant sa résistance aux variations thermiques et aux déformations.

Il peut notamment être fourni par ce biais un accrochage mécanique par surmoulage local de la plaquette métallique 7 avec un matériau compatible avec celui du bac 6 pour une solidarisation par soudure.

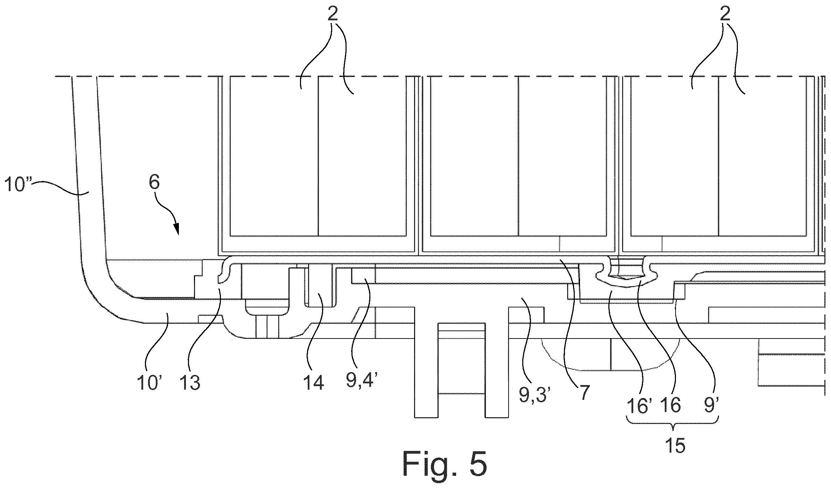

En accord avec un mode de réalisation pratique avantageux ressortant des figures 4 et 5 en particulier, chaque élément surfacique 7 à conductivité thermique élevée et en forme de plaquette, est solidarisé avec une portion de la paroi 3' du boîtier 3 constituant un élément surfacique 9 à faible conductivité thermique, ce au niveau d'au moins une zone de liaisonnement 15, préférentiellement d'une pluralité de zones de liaisonnement 15 réparties régulièrement. Chaque zone de liaisonnement 15 consiste en une déformation locale 16, protubérante en direction de la portion de paroi 3', de l'élément surfacique 7 sous forme de plaquette métallique, ladite déformation 16 étant surmoulée par un matériau 16' compatible avec le matériau de ladite portion de paroi 3' pour une liaison par soudure laser par exemple.

Ces points de liaison 15 sous forme de formations locales proéminentes en matière plastique 16' présentant un noyau métallique 16 peuvent par exemple venir en engagement avec appui dans des formations locales renfoncées 9' formées dans la portion de paroi 3' constituant l'élément surfacique 9, pour réaliser autant de liaisons mécaniques ponctuelles.

Malgré la présence de bandes de matière éventuelles entre points 16' (découlant du processus de surmoulage), un chemin de circulation de fluide FC dans la zone d'échange 6' concernée est ménagé entre les deux éléments surfaciques 7 et 9, dans le volume 8 qu'ils délimitent entre eux.

Avantageusement, il peut être prévu que l'un des deux éléments surfaciques 7 et 9 en regard, définissant entre eux un volume de circulation 8 de fluide caloporteur FC d'une zone 6' d'échange thermique, avantageusement de forme rectangulaire, présente une nervure 17 subdivisant ledit volume 8 en deux branches d'une portion élémentaire de circuit de circulation 4' en U, en S ou en serpentin.

Bien que cette forme circuit élémentaire de circulation 4' soit préférée du fait de sa simplicité de réalisation, de grande surface d'échange et de trajet de circulation adapté à une circulation aisée, d'autres formes sont également possibles telles que le serpentin, le S, le Z ou analogue.

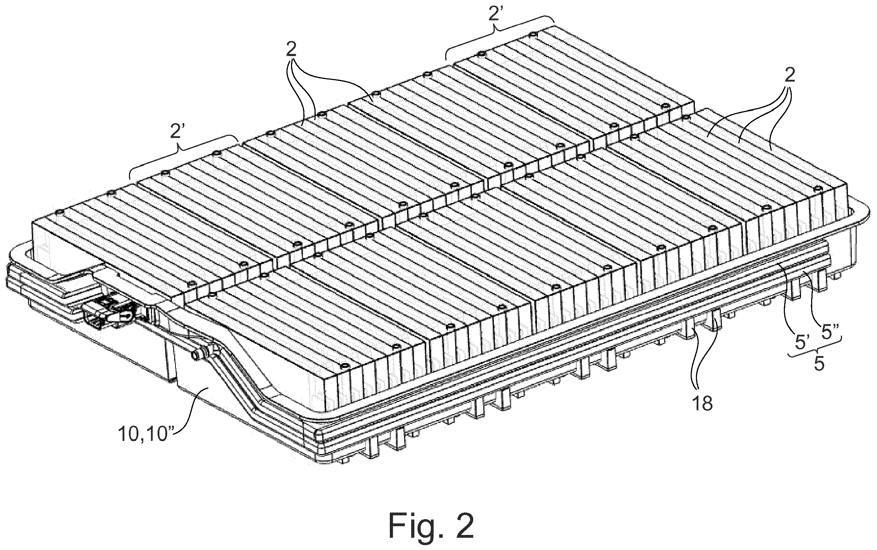

Comme cela ressort également des figures 1 à 3, 8 à 12 et 14 à 17, les moyens 4, 5 de régulation de la température comprennent des conduits de distribution 5'/collecte 5" constituant un ou plusieurs circuit(s) d'alimentation/évacuation de fluide liquide caloporteur LC, ces conduits 5', 5" étant intégrés structurellement dans le boîtier 3, de même que des lignes secondaires ou de piquage 18 reliant lesdits conduits 5', 5" aux volumes 8 de circulation des zones 6' d'échanges thermique, ces conduits 5', 5" et lignes 18 étant au moins partiellement formés d'un seul tenant avec la paroi 3' du boîtier 3.

L'intégration des conduits 5', 5" et lignes 18 peut ainsi être réalisé au moins partiellement lors de la fabrication du bac 10 et du couvercle 11 et permet de s'affranchir de la mise en place et du raccordement étanche fastidieux de conduits et durites, tout en évitant aussi l'exposition de ces moyens par rapport à l'environnement extérieur (moyens de distribution accolés contre la paroi 3').

Avantageusement, les parois tubulaires des conduits 5', 5" et des lignes 18 sont formées, d'une part, partiellement dans et/ou sur la paroi 3' du boîtier 3, préférentiellement de forme générale sensiblement parallélépipédique rectangle, et, d'autre part, partiellement par de la matière surmoulée 23, 23' et/ou des portions de paroi rapportées et assemblées par soudage par vibrations ou laser.

La répartition et la découpe desdites parois tubulaires, entre leurs parties formées par la paroi 10', 10" du bac 10 et leurs parties rapportées par portions ou par surmoulage 23, 23', dépendent des possibilités du moule de moulage du bac 10 et de la complexité de configuration du bac 10 lui-même, ainsi que le cas échéant du couvercle 11.

Comme le montrent les figures 1 notamment, le ou chaque circuit 5 d'alimentation/évacuation comprend un embout de raccordement 19 pour le ou les conduit(s) de distribution 5' et un embout de raccordement 19' pour le ou les conduit(s) de collecte 5", un circuit 5 commun ou des circuits 5 séparés étant avantageusement prévu(s) pour les volumes 8 de circulation des zones 6' d'échanges thermique présentes dans le bac inférieur 10 et le couvercle 11 qui forment les deux parties constitutives du boîtier 3.

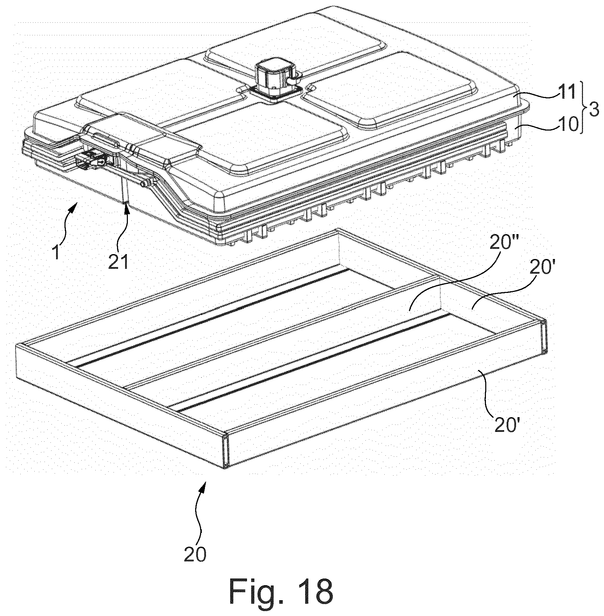

Afin de conférer au bac 10 une résistance mécanique et une rigidité améliorées, notamment compte tenu du poids important que peuvent représenter les cellules 2, il peut être prévu que le bac 10 comprenne :
- une structure de renfort intégrée dans le corps du bac 10, par exemple surmoulée par le matériau thermoplastique constituant la paroi dudit bac 10, et/ou,
- une structure de renfort 20 coopérant extérieurement, par conjugaison de formes, avec la paroi thermoplastique dudit bac 10, par exemple du type cadre fournissant notamment une rigidification médiane et périphérique audit bac 10 (figure 18). Ce cadre 20 peut comporter des parois latérales 20' et une entretoise médiane 20".

En outre, pour renforcer structurellement le fond 10' du bac 10 et éventuellement fournir une surface de paroi additionnelle pour l'aménagement de zones 6' d'échange thermique, le bac 10 peut en outre comprendre au moins une paroi intérieure de subdivision 21, s'étendant d'un seul tenant depuis le fond du bac 10, coopérant avantageusement avec une structure de renfort 20 et intégrant, le cas échéant, des volumes 8 de circulation de fluide caloporteur FC, ces volumes 8 faisant préférentiellement partie des moyens 4 de circulation du bac 10 et reliés fluidiquement aux moyens de distribution 5 (figures 8, 9, 11 et 17).

Ladite paroi de subdivision 21 peut être une paroi double subdivisant le bac 6 en deux sous-bacs et fournissant une rainure de réception pour l'entretoise 20" du cadre de renfort 20.

Par ailleurs, un moyen 22 de contrôle de la température, de la circulation et/ou de la distribution du liquide caloporteur est intégré structurellement, voire matériellement, au moins en partie dans le boîtier 3 (voir figure 8B - intégration partielle d'une pompe à eau).

Enfin, l'invention concerne également un véhicule automobile, en particulier électrique ou hybride, caractérisé en ce qu'il comprend au moins une unité de batterie 1 telle que décrite ci-dessus, cette unité de batterie 1 comportant en outre au moins un moyen de mesure de température interne, des moyens de raccordement électrique des cellules ou éléments 2 entre elles et des moyens de branchement extérieur, ces derniers étant avantageusement partiellement formés avec ou dans la paroi 3' du boîtier 3.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Unité de batterie (1), notamment pour véhicule automobile hybride et/ou électrique, comprenant essentiellement, d'une part, une pluralité de cellules (2) ou d'éléments de batterie, le cas échéant regroupé(e)s physiquement et/ou électriquement en plusieurs blocs ou modules (2'), d'autre part, un boîtier (3) logeant et entourant lesdit(e)s cellules ou éléments (2) et, enfin, des moyens (4, 5) de régulation de la température desdit(e)s cellules ou éléments (2) par circulation de fluide caloporteur (FC),
le boîtier (3) comportant, au moins au niveau d'une région de fond (6) sur laquelle reposent les cellules (2), au moins une zone (6') d'échange thermique entre lesdites cellules (2) et le fluide caloporteur (FC), ladite ou lesdites zone(s) (6') étant intégrée(s) dans la structure dudit boîtier (3),
la ou chaque zone d'échange (6') comprenant un élément surfacique (7) à conductivité thermique élevée en contact avec des cellules (2), d'une part, et le fluide caloporteur (FC), d'autre part,
la ou chaque zone d'échange (6') comprenant un volume (8) de circulation de fluide caloporteur (FC), défini entre un élément surfacique (7) à conductivité thermique élevée, en contact direct avec des cellules (2), et un élément surfacique (9) à faible conductivité thermique,
unité de batterie (1) **caractérisée**
**en ce que** le boîtier (3) est réalisé en un matériau rigide à faible conductivité thermique et est constitué, d'une part, par un bac inférieur (10), avec une paroi de fond (10') et des parois latérales (10"), et par un couvercle supérieur (11),
**en ce que** la région de fond (6) comporte plusieurs zones (6') d'échange thermique comprenant chacune un élément surfacique (7) à conductivité thermique élevée, dont chacun est un élément rapporté dans le boîtier (3) et consiste en une plaquette métallique, ou en un matériau rigide et bon conducteur thermique analogue, solidarisée de manière étanche aux liquides avec un élément surfacique (9) à faible conductivité thermique, et
**en ce que** chaque élément surfacique (7) à conductivité thermique élevée en forme de plaquette est solidarisé avec la paroi (3') du boîtier (3), d'une part, périphériquement, par accrochage mécanique ou soudure, et, d'autre part, au niveau d'une pluralité de zones (15) de liaisonnement situées à l'intérieur de la surface de ladite plaquette (7) et réparties sur la surface de ladite plaquette (7), préférentiellement régulièrement, chacune des plaquettes (7) étant associée aux cellules (2) d'un module (2').

2. Unité de batterie (1), notamment pour véhicule automobile hybride et/ou électrique, comprenant essentiellement, d'une part, une pluralité de cellules (2) ou d'éléments de batterie, le cas échéant regroupé(e)s physiquement et/ou électriquement en plusieurs blocs ou modules (2'), d'autre part, un boîtier (3) logeant et entourant lesdit(e)s cellules ou éléments (2) et, enfin, des moyens (4, 5) de régulation de la température desdit(e)s cellules ou éléments (2) par circulation de fluide caloporteur (FC),
le boîtier (3) comportant, au moins au niveau d'une région de fond (6) sur laquelle reposent les cellules (2), au moins une zone (6') d'échange thermique entre lesdites cellules (2) et le fluide caloporteur (FC), ladite ou lesdites zone(s) (6') étant intégrée(s) dans la structure dudit boîtier (3),
la ou chaque zone d'échange (6') comprenant un élément surfacique (7) à conductivité thermique élevée en contact avec des cellules (2), d'une part, et le fluide caloporteur (FC), d'autre part,
la ou chaque zone d'échange (6') comprenant un volume (8) de circulation de fluide caloporteur (FC), défini entre un élément surfacique (7) à conductivité thermique élevée, en contact direct avec des cellules (2), et un élément surfacique (9) à faible conductivité thermique,
unité de batterie (1) **caractérisée**
**en ce que** la région de fond (6) comporte plusieurs zones (6') d'échange thermique comprenant chacune un élément surfacique (7) à conductivité thermique élevée, dont chacun est un élément rapporté dans le boîtier (3) et consiste en une plaquette métallique, ou en un matériau rigide et bon conducteur thermique analogue, solidarisée de manière étanche aux liquides avec un élément surfacique (9) à faible conductivité thermique,
**en ce que** chaque élément surfacique (7) à conductivité thermique élevée en forme de plaquette est solidarisé avec la paroi (3') du boîtier (3), d'une part, périphériquement, préférentiellement continûment et par exemple par accrochage mécanique ou soudure, et, d'autre part, au niveau d'au moins une zone (15) de liaisonnement située à l'intérieur de la surface de ladite plaquette (7),
**en ce que** le boîtier (3) est réalisé en un matériau rigide à faible conductivité thermique et est constitué, d'une part, par un bac inférieur (10), avec une paroi de fond (10') et des parois latérales (10"), et par un couvercle supérieur (11), et
**en ce que** le couvercle (11) également intègre, dans sa structure, une ou des zones (6') d'échange thermique entre au moins certaines des cellules (2) et le fluide caloporteur (FC), la ou chaque zone d'échange thermique (6') du couvercle (11) comprenant un volume (8) de circulation de fluide caloporteur (FC) et étant constituée par la coopération d'un(e) formation ou renfoncement de la paroi (11') du couvercle (11), constituant un élément surfacique (9) à faible conductivité thermique, avec un élément surfacique (7) à conductivité thermique élevée, en forme de plaquette et en contact avec des cellules (2), par exemple toutes les cellules (2) d'un module (2').

3. Unité de batterie selon la revendication 1 ou 2, **caractérisée en ce que** l'élément surfacique (9) à faible conductivité thermique de la ou de chaque zone d'échange (6') fait partie intégrante du boîtier (3) et constitue avantageusement une portion de la paroi (3') de ce dernier.

4. Unité de batterie selon l'une quelconque des revendications 1 à 3, **caractérisée en ce que** les volumes de circulation (8) de la ou des différentes zone(s) d'échange thermique (6') forment des portions d'un ou de plusieurs circuit(s) (4) de circulation de fluide caloporteur (FC), intégré(s) dans la structure du boîtier (3), lesdites portions de circuit (4) étant reliées fluidiquement en série, ou non, et raccordées à des conduits (5', 5") de distribution/collecte faisant partie d'un circuit (5) d'alimentation/évacuation de fluide liquide caloporteur (FC), ces circuits (4 et 5) constituant les moyens de régulation de la température des cellules (2).

5. Unité de batterie selon l'une quelconque des revendications 1 à 4, **caractérisée en ce que** le boîtier (3) est réalisé en plastique et **en ce que** le bac inférieur (10) et le couvercle supérieur (11) sont assemblés périphériquement par vissage, et éventuellement avec interposition d'un joint d'étanchéité.

6. Unité de batterie selon la revendication 2 ou 5, **caractérisée en ce que** le bac inférieur (10) présente des formations ou renfoncements dans sa paroi de fond (10'), et éventuellement dans certaines au moins de ses parois latérales (10"), ces formations ou renfoncements constituant chacun un élément surfacique (9) à faible conductivité thermique et formant, en coopération chacun avec un élément surfacique (7) à conductivité thermique élevée, en forme de plaquette et en contact avec des cellules (2), par exemple toutes les cellules (2) d'un module (2'), des zones (6') d'échange thermique avec chacune un volume (8) de circulation de fluide caloporteur (FC).

7. Unité de batterie selon l'une quelconque des revendications 5 ou 6, pour autant qu'elles se rattachent à la revendication 1, **caractérisée en ce que** le couvercle (11) également intègre, dans sa structure, une ou des zones (6') d'échange thermique entre au moins certaines des, préférentiellement toutes les, cellules (2) et le fluide caloporteur (FC), la ou chaque zone d'échange thermique (6') du couvercle (11) comprenant un volume (8) de circulation de fluide caloporteur (FC) et étant constituée par la coopération d'un(e) formation ou renfoncement de la paroi (11') du couvercle (11), constituant un élément surfacique (9) à faible conductivité thermique, avec un élément surfacique (7) à conductivité thermique élevée, en forme de plaquette et en contact avec des cellules (2), par exemple toutes les cellules (2) d'un module (2').

8. Unité de batterie selon l'une quelconque des revendications 2, 6 et 7, **caractérisée en ce qu'**une plaque ou feuille (12) flexible et thermiquement conductrice est intercalée entre l'élément ou les éléments surfacique(s) (7) à conductivité thermique élevée de la ou des zone(s) (6') d'échange thermique intégrées dans le couvercle (11), le fond (6') du bac (6) et/ou dans les parois latérales (10") du bac (10), d'une part, et les faces concernées des cellules (2) des modules (2') en regard, d'autre part.

9. Unité de batterie selon l'une quelconque des revendications 1 à 8, **caractérisée en ce que** chaque zone d'échange thermique (6') comprend un volume (8) de circulation de fluide caloporteur (FC) formant une portion de circuit en forme de U ou en serpentin, dont les deux extrémités libres des deux branches sont reliées fluidiquement à des lignes (5, 5") de distribution/collecte faisant partie d'un circuit (5) d'alimentation/évacuation de fluide caloporteur (FC).

10. Unité de batterie selon l'une quelconque des revendications 1, à 3, 6 et 7, **caractérisée en ce que** chaque élément surfacique (7) à conductivité thermique élevée, en forme de plaquette, est solidarisé par accrochage mécanique avec la paroi (3') du boîtier (3), par exemple par bouterollage, par encliquetage, par sertissage, par vissage ou analogue, la portion de paroi (3') en regard de l'élément surfacique (7) constituant un élément surfacique (9) à faible conductivité thermique.

11. Unité de batterie selon l'une quelconque des revendications là 3, 6 et 7, **caractérisée en ce que** chaque élément surfacique (7) à conductivité thermique élevée, en forme de plaquette, comporte une zone de bord formant cadre périphérique (13), d'un seul tenant ou rapporté par surmoulage, solidarisé par soudure avec la paroi (3') du boîtier (3), la portion de paroi (3') en regard de l'élément surfacique (7) constituant un élément surfacique (9) à faible conductivité thermique.

12. Unité de batterie selon la revendication 10 ou 11, **caractérisée en ce qu'**un joint d'étanchéité (14) est présent, à l'état comprimé, entre les bords périphériques mutuellement solidarisés des deux éléments surfaciques (7 et 9).

13. Unité de batterie selon l'une quelconque des revendications 1, 2, 5, 6 et 9 à 12, **caractérisée en ce que** chaque élément surfacique (7) à conductivité thermique élevée et en forme de plaquette, est solidarisé avec une portion de la paroi (3') du boîtier (3) constituant un élément surfacique (9) à faible conductivité thermique, ce au niveau d'au moins une zone de liaisonnement (15), préférentiellement d'une pluralité de zones de liaisonnement (15) réparties régulièrement, chaque zone de liaisonnement (15) consistant en une déformation locale (16), protubérante en direction de la portion de paroi (3'), de l'élément surfacique (7) sous forme de plaquette métallique, ladite déformation (16) étant surmoulée par un matériau (16') compatible avec le matériau de ladite portion de paroi (3') pour une liaison par soudure laser par exemple.

14. Unité de batterie selon l'une quelconque des revendications 1 à 13, **caractérisée en ce que** l'un des deux éléments surfaciques (7 et 9) en regard, définissant entre eux un volume de circulation (8) de fluide caloporteur (FC) d'une zone (6') d'échange thermique, avantageusement de forme rectangulaire, présente une nervure (17) subdivisant ledit volume (8) en deux branches d'une portion élémentaire de circuit de circulation 4' en U, en S ou en serpentin.

15. Unité de batterie selon l'une quelconque des revendications 1 à 14, **caractérisée en ce que** les moyens (4, 5) de régulation de la température comprennent des conduits de distribution (5')/collecte (5") constituant un ou plusieurs circuit(s) d'alimentation/évacuation de fluide liquide caloporteur (LC), ces conduits (5', 5") étant intégrés structurellement dans le boîtier (3), de même que des lignes secondaires ou de piquage (18) reliant lesdits conduits (5', 5") aux volumes (8) de circulation des zones (6') d'échanges thermique, ces conduits (5', 5") et lignes (18) étant au moins partiellement formés d'un seul tenant avec la paroi (3') du boîtier (3).

16. Unité de batterie selon la revendication 15, **caractérisée en ce que** les parois tubulaires des conduits (5', 5") et des lignes (18) sont formées, d'une part, partiellement dans et/ou sur la paroi (3') du boîtier (3), préférentiellement de forme générale sensiblement parallélépipédique rectangle, et, d'autre part, partiellement par de la matière surmoulée (23, 23') et/ou des portions de paroi rapportées et assemblées par soudage par vibrations ou laser.

17. Unité de batterie selon l'une quelconque des revendications 15 et 16, **caractérisée en ce que** le ou chaque circuit (5) d'alimentation/évacuation comprend un embout de raccordement (19) pour le ou les conduit(s) de distribution (5') et un embout de raccordement (19') pour le ou les conduit(s) de collecte (5"), un circuit (5) commun ou des circuits (5) séparés étant avantageusement prévu(s) pour les volumes (8) de circulation des zones (6') d'échanges thermique présentes dans le bac inférieur (10) et le couvercle (11) qui forment les deux parties constitutives du boîtier (3).

18. Unité de batterie selon l'une quelconque des revendications 1 à 17, **caractérisée en ce que** le bac (10) comprend une structure de renfort intégrée dans le corps du bac (10), par exemple surmoulée par le matériau thermoplastique constituant la paroi dudit bac (10).

19. Unité de batterie selon l'une quelconque des revendications 1 à 17, **caractérisée en ce que** le bac (10) comprend une structure de renfort (20) coopérant extérieurement, par conjugaison de formes, avec la paroi thermoplastique dudit bac (10), par exemple du type cadre fournissant notamment une rigidification médiane et périphérique audit bac (10).

20. Unité de batterie selon l'une quelconque des revendications 1 à 19, **caractérisée en ce que** le bac (10) comprend au moins une paroi intérieure de subdivision (21), s'étendant d'un seul tenant depuis le fond du bac (10), coopérant avantageusement avec une structure de renfort (20) et intégrant, le cas échéant, des volumes (8) de circulation de fluide caloporteur (FC), ces volumes (8) faisant préférentiellement partie des moyens (4) de circulation du bac (10) et reliés fluidiquement aux moyens de distribution (5).

21. Unité de batterie selon l'une quelconque des revendications 1 à 20, **caractérisée en ce qu'**un moyen (22) de contrôle de la température, de la circulation et/ou de la distribution du liquide caloporteur est intégré structurellement, voire matériellement, au moins en partie dans le boîtier (3).

22. Véhicule automobile, en particulier électrique ou hybride, **caractérisé en ce qu'**il comprend au moins une unité de batterie (1) selon l'une quelconque des revendications 1 à 21, cette unité de batterie (1) comportant en outre au moins un moyen de mesure de température interne, des moyens de raccordement électrique des cellules ou éléments (2) entre elles et des moyens de branchement extérieur, ces derniers étant avantageusement partiellement formés avec ou dans la paroi (3') du boîtier (3).

## Patentansprüche

1. Batterieeinheit (1), insbesondere für ein Hybrid-und/oder Elektrokraftfahrzeug, umfassend im Wesentlichen einerseits eine Mehrzahl von Batteriezellen (2) oder -elementen, die gegebenenfalls physisch und/oder elektrisch zu mehreren Blöcken oder Modulen (2') zusammengefasst sind, andererseits ein Gehäuse (3), das die Zellen oder Elemente (2) aufnimmt und umgibt, und schließlich Mittel (4, 5) zur Regelung der Temperatur der Zellen oder Elemente (2) durch Zirkulation von Wärmeübertragungsfluid (FC),
wobei das Gehäuse (3) wenigstens an einem Bodenbereich (6), auf dem die Zellen (2) aufliegen, mindestens eine Zone (6') zum Wärmeaustausch zwischen den Zellen (2) und dem Wärmeübertragungsfluid (FC) aufweisen, wobei die Zone(n) (6') in die Struktur des Gehäuses (3) integriert ist bzw. sind,
wobei die oder jede Austauschzone (6') ein Flächenelement (7) mit erhöhter Wärmeleitfähigkeit in Kontakt mit Zellen (2) einerseits und dem Wärmeübertragungsfluid (FC) andererseits umfasst,
wobei die oder jede Austauschzone (6') ein Volumen (8) zur Zirkulation von Wärmeübertragungsfluid (FC) umfasst, das zwischen einem Flächenelement (7) mit erhöhter Wärmeleitfähigkeit in direktem Kontakt mit Zellen (2) und einem Flächenelement (9) mit geringer Wärmeleitfähigkeit definiert ist,
wobei die Batterieeinheit (1) **dadurch gekennzeichnet ist, dass** das Gehäuse (3) aus einem starren Material mit geringer Wärmeleitfähigkeit hergestellt und einerseits von einer unteren Wanne (10) mit einer Bodenwand (10') und Seitenwänden (10") und von einem oberen Deckel (11) gebildet ist,
dadurch, dass der Bodenbereich (6) mehrere Wärmeaustauschzonen (6') aufweist, die jeweils ein Flächenelement (7) mit erhöhter Wärmeleitfähigkeit umfassen, wovon jedes ein Element ist, das im Gehäuse (3) eingesetzt ist, und aus einem Plättchen aus Metall oder einem analogen starren und gut wärmeleitenden Material besteht, das flüssigkeitsdicht mit einem Flächenelement (9) mit geringer Wärmeleitfähigkeit fest verbunden ist, und
dadurch, dass jedes Flächenelement (7) mit erhöhter Wärmeleitfähigkeit in Plättchenform mit der Wand (3') des Gehäuses (3) fest verbunden ist, einerseits in Umfangsrichtung durch mechanische Befestigung oder Schweißen und andererseits an einer Mehrzahl von Anbindungszonen (15), die sich innerhalb der Fläche des Plättchens (7) befinden und auf der Fläche des Plättchens (7) vorzugsweise regelmäßig verteilt sind, wobei jedes der Plättchen (7) den Zellen (2) eines Moduls (2') zugeordnet ist.

2. Batterieeinheit (1), insbesondere für ein Hybrid-und/oder Elektrokraftfahrzeug, umfassend im Wesentlichen einerseits eine Mehrzahl von Batteriezellen (2) oder -elementen, die gegebenenfalls physisch und/oder elektrisch zu mehreren Blöcken oder Modulen (2') zusammengefasst sind, andererseits ein Gehäuse (3), das die Zellen oder Elemente (2) aufnimmt und umgibt, und schließlich Mittel (4, 5) zur Regelung der Temperatur der Zellen oder Elemente (2) durch Zirkulation von Wärmeübertragungsfluid (FC),
wobei das Gehäuse (3) wenigstens an einem Bodenbereich (6), auf dem die Zellen (2) aufliegen, mindestens eine Zone (6') zum Wärmeaustausch zwischen den Zellen (2) und dem Wärmeübertragungsfluid (FC) aufweisen, wobei die Zone(n) (6') in die Struktur des Gehäuses (3) integriert ist bzw. sind,
wobei die oder jede Austauschzone (6') ein Flächenelement (7) mit erhöhter Wärmeleitfähigkeit in Kontakt mit Zellen (2) einerseits und dem Wärmeübertragungsfluid (FC) andererseits umfasst,
wobei die oder jede Austauschzone (6') ein Volumen (8) zur Zirkulation von Wärmeübertragungsfluid (FC) umfasst, das zwischen einem Flächenelement (7) mit erhöhter Wärmeleitfähigkeit in direktem Kontakt mit Zellen (2) und einem Flächenelement (9) mit geringer Wärmeleitfähigkeit definiert ist,
wobei die Batterieeinheit (1) **dadurch gekennzeichnet ist, dass** der Bodenbereich (6) mehrere Wärmeaustauschzonen (6') aufweist, die jeweils ein Flächenelement (7) mit erhöhter Wärmeleitfähigkeit umfassen, wovon jedes ein Element ist, das im Gehäuse (3) eingesetzt ist, und aus einem Plättchen aus Metall oder einem analogen starren und gut wärmeleitenden Material besteht, das flüssigkeitsdicht mit einem Flächenelement (9) mit geringer Wärmeleitfähigkeit fest verbunden ist,
dadurch, dass jedes Flächenelement (7) mit erhöhter Wärmeleitfähigkeit in Plättchenform mit der Wand (3') des Gehäuses (3) fest verbunden ist, einerseits in Umfangsrichtung, vorzugsweise durchgehend und zum Beispiel durch mechanische Befestigung oder Schweißen, und andererseits an mindestens einer Anbindungszone (15), die sich innerhalb der Fläche des Plättchens (7) befindet,
dadurch, dass das Gehäuse (3) aus einem starren Material mit geringer Wärmeleitfähigkeit hergestellt und einerseits von einer unteren Wanne (10) mit einer Bodenwand (10') und Seitenwänden (10") und von einem oberen Deckel (11) gebildet ist, und
dadurch, dass der Deckel (11) ebenfalls in seiner Struktur eine oder mehrere Zonen (6') zum Wärmeaustausch zwischen wenigstens einigen der Zellen (2) und dem Wärmeübertragungsfluid (FC) enthält, wobei die oder jede Wärmeaustauschzone (6') des Deckels (11) ein Volumen (8) zur Zirkulation von Wärmeübertragungsfluid (FC) umfasst und durch die Zusammenwirkung einer Ausformung oder Verstärkung der Wand (11') des Deckels (11), die ein Flächenelement (9) mit geringer Wärmeleitfähigkeit bildet, mit einem Flächenelement (7) mit erhöhter Wärmeleitfähigkeit in Plättchenform und in Kontakt mit Zellen (2), zum Beispiel allen Zellen (2) eines Moduls (2'), gebildet ist.

3. Batterieeinheit nach Anspruch 1 oder 2, **dadurch gekennzeichnet, dass** das Flächenelement (9) mit geringer Wärmeleitfähigkeit der oder jeder Austauschzone (6') fester Bestandteil des Gehäuses (3) ist und vorteilhafterweise einen Abschnitt der Wand (3') des letzteren bildet.

4. Batterieeinheit nach einem der Ansprüche 1 bis 3, **dadurch gekennzeichnet, dass** die Zirkulationsvolumen (8) der Wärmeaustauschzone oder der verschiedenen Wärmeaustauschzonen (6') Abschnitte eines oder mehrerer Kreise (4) zur Zirkulation von Wärmeübertragungsfluid (FC) bilden, der oder die in die Struktur des Gehäuses (3) integriert ist bzw. sind, wobei die Kreisabschnitte (4) fluidisch in Reihe geschaltet sind oder nicht und an Verteilungs-/Sammelrohre (5', 5") angeschlossen sind, die zu einem Speise-/Ablaufkreis (5) für flüssiges Wärmeübertragungsfluid (FC) gehören, wobei diese Kreise (4 und 5) die Mittel zur Regelung der Temperatur der Zellen (2) bilden.

5. Batterieeinheit nach einem der Ansprüche 1 bis 4, **dadurch gekennzeichnet, dass** das Gehäuse (3) aus Kunststoff hergestellt ist, und dadurch, dass die untere Wanne (10) und der obere Deckel (11) in Umfangsrichtung durch Verschraubung und eventuell unter Einfügung einer Dichtung zusammengesetzt sind.

6. Batterieeinheit nach Anspruch 2 oder 5, **dadurch gekennzeichnet, dass** die untere Wanne (10) Ausformungen oder Verstärkungen in ihrer Bodenwand (10') und eventuell in wenigstens einigen ihrer Seitenwände (10") aufweist, wobei diese Ausformungen oder Verstärkungen jeweils ein Flächenelement (9) mit geringer Wärmeleitfähigkeit bilden und jeweils in Zusammenwirkung mit einem Flächenelement (7) mit erhöhter Wärmeleitfähigkeit in Plättchenform und in Kontakt mit Zellen (2), zum Beispiel allen Zellen (2) eines Moduls (2'), Zonen (6') zum Wärmeaustausch jeweils mit einem Volumen (8) zur Zirkulation von Wärmeübertragungsfluid (FC) bilden.

7. Batterieeinheit nach einem der Ansprüche 5 oder 6, sofern sie mit Anspruch 1 in Verbindung stehen, **dadurch gekennzeichnet, dass** der Deckel (11) ebenfalls in seiner Struktur eine oder mehrere Zonen (6') zum Wärmeaustausch zwischen wenigstens einigen der, vorzugsweise allen Zellen (2) und dem Wärmeübertragungsfluid (FC) enthält, wobei die oder jede Wärmeaustauschzone (6') des Deckels (11) ein Volumen (8) zur Zirkulation von Wärmeübertragungsfluid (FC) umfasst und durch die Zusammenwirkung einer Ausformung oder Verstärkung der Wand (11') des Deckels (11), die ein Flächenelement (9) mit geringer Wärmeleitfähigkeit bildet, mit einem Flächenelement (7) mit erhöhter Wärmeleitfähigkeit in Plättchenform und in Kontakt mit Zellen (2), zum Beispiel allen Zellen (2) eines Moduls (2'), gebildet ist.

8. Batterieeinheit nach einem der Ansprüche 2, 6 und 7, **dadurch gekennzeichnet, dass** eine Platte oder ein Blatt (12), die bzw. das flexibel und wärmeleitend ist, zwischen das oder die Flächenelement (e) (7) mit erhöhter Wärmeleitfähigkeit der Wärmeaustauschzone(n) (6'), die in den Deckel (11), den Boden (6') der Wanne (6) und/oder in die Seitenwände (10") der Wanne (10) integriert sind, einerseits, und die betroffenen Flächen der Zellen (2) der Module (2'), die gegenüber liegen, andererseits, eingefügt ist.

9. Batterieeinheit nach einem der Ansprüche 1 bis 8, **dadurch gekennzeichnet, dass** jede Wärmeaustauschzone (6') ein Volumen (8) zur Zirkulation von Wärmeübertragungsfluid (FC) umfasst, das einen U- oder schlangenförmigen Kreisabschnitt bildet, dessen zwei freie Enden der zwei Schenkel mit Verteilungs-/Sammelleitungen (5, 5") fluidisch verbunden sind, die zu einem Speise-/Ablaufkreis (5) für Wärmeübertragungsfluid (FC) gehören.

10. Batterieeinheit nach einem der Ansprüche 1 bis 3, 6 und 7, **dadurch gekennzeichnet, dass** jedes Flächenelement (7) mit erhöhter Wärmeleitfähigkeit in Plättchenform durch mechanische Befestigung mit der Wand (3') des Gehäuses (3) fest verbunden ist, zum Beispiel durch Nieten, durch Verrasten, durch Crimpen, Verschraubung oder dergleichen, wobei der Wandabschnitt (3') gegenüber dem Flächenelement (7) ein Flächenelement (9) mit geringer Wärmeleitfähigkeit bildet.

11. Batterieeinheit nach einem der Ansprüche 1 bis 3, 6 und 7, **dadurch gekennzeichnet, dass** jedes Flächenelement (7) mit erhöhter Wärmeleitfähigkeit in Plättchenform eine Randzone aufweist, die einen einstückigen oder durch Überformung aufgesetzten umlaufenden Rahmen (13) bildet, der durch Schweißen mit der Wand (3') des Gehäuses (3) fest verbunden ist, wobei der Wandabschnitt (3') gegenüber dem Flächenelement (7) ein Flächenelement (9) mit geringer Wärmeleitfähigkeit bildet.

12. Batterieeinheit nach Anspruch 10 oder 11, **dadurch gekennzeichnet, dass** eine Dichtung (14) im zusammengedrückten Zustand zwischen den miteinander fest verbundenen umlaufenden Rändern der zwei Flächenelemente (7 und 9) vorhanden ist.

13. Batterieeinheit nach einem der Ansprüche 1, 2, 5, 6 und 9 bis 12, **dadurch gekennzeichnet, dass** jedes Flächenelement (7) mit erhöhter Wärmeleitfähigkeit und in Plättchenform mit einem Abschnitt der Wand (3') des Gehäuses (3) fest verbunden ist, der ein Flächenelement (9) mit geringer Wärmeleitfähigkeit bildet, und zwar an mindestens einer Anbindungszone (15), vorzugsweise einer Mehrzahl von Anbindungszonen (15), die gleichmäßig verteilt sind, wobei jede Anbindungszone (15) aus einer in Richtung des Wandabschnitts (3') hervorstehenden lokalen Verformung (16) des Flächenelements (7) in Metallplättchenform besteht, wobei die Verformung (16) von einem Material (16') überformt ist, das mit dem Material des Wandabschnitts (3') kompatibel ist, zum Beispiel für eine Verbindung durch Laserschweißen.

14. Batterieeinheit nach einem der Ansprüche 1 bis 13, **dadurch gekennzeichnet, dass** eins der zwei gegenüber liegenden Flächenelemente (7 und 9), die miteinander ein Zirkulationsvolumen (8) für Wärmeübertragungsfluid (FC) einer Wärmeaustauschzone (6'), vorteilhafterweise rechteckiger Form, definieren, eine Rippe (17) aufweist, die das Volumen (8) in zwei Schenkel eines Elementarabschnitts eines Zirkulationskreises 4' in U-, S- oder Schlangenform unterteilt.

15. Batterieeinheit nach einem der Ansprüche 1 bis 14, **dadurch gekennzeichnet, dass** die Mittel (4, 5) zur Regelung der Temperatur Verteilungs- (5')/Sammelrohre (5") umfassen, die einen oder mehrere Speise-/Ablaufkreise für flüssiges Wärmeübertragungsfluid (LC) bilden, wobei diese Rohre (5', 5") strukturell ins Gehäuse (3) integriert sind, ebenso wie Sekundär- oder Abzweigleitungen (18), die die Rohre (5', 5") mit den Zirkulationsvolumen (8) der Wärmeaustauschzonen (6') verbinden, wobei diese Rohre (5', 5") und Leitungen (18) wenigstens teilweise einstückig mit der Wand (3') des Gehäuses (3) ausgebildet sind.

16. Batterieeinheit nach Anspruch 15, **dadurch gekennzeichnet, dass** die röhrenförmigen Wände der Rohre (5', 5") und der Leitungen (18) einerseits teilweise in und/oder auf der Wand (3') des Gehäuses (3), vorzugsweise allgemein im Wesentlichen rechteckig parallelepipedförmig, und andererseits teilweise von überformtem Material (23, 23') und/oder Wandabschnitten gebildet sind, die durch Vibrations- oder Laserschweißen aufgesetzt und zusammengesetzt sind.

17. Batterieeinheit nach einem der Ansprüche 15 und 16, **dadurch gekennzeichnet, dass** der oder jeder Speise-/Ablaufkreis (5) ein Anschlussstück (19) für das oder die Verteilungsrohr(e) (5') und ein Anschlussstück (19') für das oder die Sammelrohr (e) (5") umfasst, wobei ein gemeinsamer Kreis (5) oder getrennte Kreise (5) vorteilhafterweise für die Zirkulationsvolumen (8) der Wärmeaustauschzonen (6') vorgesehen ist bzw. sind, die in der unteren Wanne (10) und dem Deckel (11) vorhanden sind, die die zwei Bestandteile des Gehäuses (3) bilden.

18. Batterieeinheit nach einem der Ansprüche 1 bis 17, **dadurch gekennzeichnet, dass** die Wanne (10) eine Verstärkungsstruktur umfasst, die in den Körper der Wanne (10) integriert ist, zum Beispiel vom thermoplastischen Material überformt ist, das die Wand der Wanne (10) bildet.

19. Batterieeinheit nach einem der Ansprüche 1 bis 17, **dadurch gekennzeichnet, dass** die Wanne (10) eine Verstärkungsstruktur (20) umfasst, die außen formschlüssig mit der thermoplastischen Wand der Wanne (10) zusammenwirkt, zum Beispiel vom Typ eines Rahmens, der der Wanne (10) insbesondere eine mittlere und umlaufende Versteifung verleiht.

20. Batterieeinheit nach einem der Ansprüche 1 bis 19, **dadurch gekennzeichnet, dass** die Wanne (10) mindestens eine Unterteilungs-Innenwand (21) umfasst, die sich einstückig vom Boden der Wanne (10) erstreckt, vorteilhafterweise mit einer Verstärkungsstruktur (20) zusammenwirkt und gegebenenfalls Volumen (8) zur Zirkulation von Wärmeübertragungsfluid (FC) enthält, wobei diese Volumen (8) vorzugsweise zu den Zirkulationsmitteln (4) der Wanne (10) gehören und fluidisch mit den Verteilungsmitteln (5) verbunden sind.

21. Batterieeinheit nach einem der Ansprüche 1 bis 20, **dadurch gekennzeichnet, dass** ein Mittel (22) zur Steuerung der Temperatur, der Zirkulation und/oder Verteilung der Wärmeübertragungsflüssigkeit strukturell, ja sogar materiell wenigstens teilweise ins Gehäuse (3) integriert ist.

22. Kraftfahrzeug, insbesondere Elektro- oder Hybridkraftfahrzeug, **dadurch gekennzeichnet, dass** es mindestens eine Batterieeinheit (1) nach einem der Ansprüche 1 bis 21 umfasst, wobei diese Batterieeinheit (1) ferner mindestens ein Innentemperatur-Messmittel, Mittel zur elektrischen Verbindung der Zellen oder Elemente (2) miteinander und Außenanschlussmittel aufweist, wobei letztere vorteilhafterweise teilweise mit oder in der Wand (3') des Gehäuses (3) ausgebildet sind.

## Claims

1. Battery unit (1), notably for a hybrid and/or electric motor vehicle, essentially comprising, on the one hand, a plurality of battery cells (2) or elements, if necessary grouped together physically and/or electrically in several blocks or modules (2'), on the other hand, a housing (3) accommodating and surrounding said cells or elements (2) and, finally, means (4, 5) for regulating the temperature of said cells or elements (2) by circulation of heat-transfer fluid (FC),
the housing (3) comprising, at least in a bottom region (6) on which the cells (2) are arranged, at least one zone (6') for exchanging heat between said cells (2) and the heat-transfer fluid (FC), said zone or zones (6') being incorporated in the structure of said housing (3),
the or each exchange zone (6') comprising a surface element (7) with high thermal conductivity in contact with cells (2), on the one hand, and the heat-transfer fluid (FC), on the other hand,
the or each exchange zone (6') comprising a volume (8) for circulation of heat-transfer fluid (FC), defined between a surface element (7) with high thermal conductivity, in direct contact with cells (2), and a surface element (9) with low thermal conductivity,
said battery unit (1) being **characterized in that** the housing (3) is made of a rigid material with low thermal conductivity and consists, on the one hand, of a bottom tray (10), with a bottom wall (10') and lateral walls (10"), and of a top cover (11),
**in that** the bottom region (6) comprises several heat exchange zones (6') each comprising a surface element (7) with high thermal conductivity, each of which is an element added in the housing (3) and consists of a metal plate or of a similar material that is rigid and a good heat conductor, liquid-tightly secured to a surface element (9) with low thermal conductivity,
and
**in that** each surface element (7) with high thermal conductivity in the form of a plate is secured to the wall (3') of the housing (3), on the one hand, peripherally, by mechanical attachment or welding, and, on the other hand, in a plurality of bonding zones (15) situated inside the surface of said plate (7) and distributed over the surface of said plate (7), preferentially regularly, each of the plates (7) being associated with the cells (2) of a module (2').

2. Battery unit (1), notably for a hybrid and/or electric motor vehicle, essentially comprising, on the one hand, a plurality of battery cells (2) or elements, if necessary grouped together physically and/or electrically in several blocks or modules (2'), on the other hand, a housing (3) accommodating and surrounding said cells or elements (2) and, finally, means (4, 5) for regulating the temperature of said cells or elements (2) by circulation of heat-transfer fluid (FC),
the housing (3) comprising, at least in a bottom region (6) on which the cells (2) are arranged, at least one zone (6') for exchanging heat between said cells (2) and the heat-transfer fluid (FC), said zone or zones (6') being incorporated in the structure of said housing (3),
the or each exchange zone (6') comprising a surface element (7) with high thermal conductivity in contact with cells (2), on the one hand, and the heat-transfer fluid (FC), on the other hand,
the or each exchange zone (6') comprising a volume (8) for circulation of heat-transfer fluid (FC), defined between a surface element (7) with high thermal conductivity, in direct contact with cells (2), and a surface element (9) with low thermal conductivity,
said battery unit (1) being **characterized in that** the bottom region (6) comprises several heat exchange zones (6') each comprising a surface element (7) with high thermal conductivity, each of which is an element added in the housing (3) and consists of a metal plate, or of a similar material that is rigid and a good heat conductor, liquid-tightly secured to a surface element (9) with low thermal conductivity,
**in that** each surface element (7) with high thermal conductivity in the form of a plate is secured with the wall (3') of the housing (3), on the one hand, peripherally, preferentially continually and for example by mechanical attachment or welding, and, on the other hand, in at least one bonding zone (15) situated inside the surface of said plate (7),
**in that** the housing (3) is made of a rigid material with low thermal conductivity and consists, on the one hand, of a bottom tray (10), with a bottom wall (10') and lateral walls (10"), and of a top cover (11), and **in that** the cover (11) also incorporates, in its structure, one or more zones (6') for exchanging heat between at least some of the cells (2) and the heat-transfer fluid (FC), the or each heat exchange zone (6') of the cover (11) comprising a volume (8) for circulation of heat-transfer fluid (FC) and being constituted by the cooperation of a formation or depression of the wall (11') of the cover (11), constituting a surface element (9) with low thermal conductivity, with a surface element (7) with high thermal conductivity, in the form of a plate and in contact with cells (2), for example all the cells (2) of a module (2').

3. Battery unit according to Claim 1 or 2, **characterized in that** the surface element (9) with low thermal conductivity of the or each exchange zone (6') forms an integral part of the housing (3) and advantageously constitutes a portion of the wall (3') thereof.

4. Battery unit according to any one of Claims 1 to 3, **characterized in that** the circulation volumes (8) of the different heat exchange zone or zones (6') form portions of one or more circuits (4) for circulation of heat-transfer fluid (FC), incorporated in the structure of the housing (3), said portions of circuit (4) being fluidically linked in series, or not, and connected to distribution/collection ducts (5', 5") forming part of a circuit (5) for supplying/discharging heat-transfer liquid fluid (FC), these circuits (4 and 5) constituting the means for regulating the temperature of the cells (2).

5. Battery unit according to any one of Claims 1 to 4, **characterized in that** the housing (3) is made of plastic and **in that** the bottom tray (10) and the top cover (11) are assembled peripherally by screwing, and possibly with the interposition of a seal.

6. Battery unit according to Claim 2 or 5, **characterized in that** the bottom tray (10) has formations or depressions in its bottom wall (10'), and possibly in at least some of its lateral walls (10"), these formations or depressions each constituting a surface element (9) with low thermal conductivity and forming, each in cooperation with a surface element (7) with high thermal conductivity, in the form of a plate and in contact with cells (2), for example all the cells (2) of a module (2'), heat exchange zones (6') each with a volume (8) for circulation of heat-transfer fluid (FC).

7. Battery unit according to either one of Claims 5 and 6, in as much they refer back to Claim 1, **characterized in that** the cover (11) also incorporates, in its structure, one or more zones (6') for exchanging heat between at least some of, preferably all, the cells (2) and the heat-transfer fluid (FC), the or each heat exchange zone (6') of the cover (11) comprising a volume (8) for circulation of heat-transfer fluid (FC) and being constituted by the cooperation of a formation or depression of the wall (11') of the cover (11), constituting a surface element (9) with low thermal conductivity, with a surface element (7) with high thermal conductivity, in the form of a plate and in contact with cells (2), for example all the cells (2) of a module (2').

8. Battery unit according to any one of Claims 2, 6 and 7, **characterized in that** a flexible and thermally conductive sheet or leaf (12) is inserted between the surface element or elements (7) with high thermal conductivity of the heat exchange zone or zones (6') incorporated in the cover (11), the bottom (6') of the tray (6) and/or in the lateral walls (10'') of the tray (10), on the one hand, and the faces concerned of the cells (2) of the facing modules (2'), on the other hand.

9. Battery unit according to any one of Claims 1 to 8, **characterized in that** each heat exchange zone (6') comprises a volume (8) for circulation of heat-transfer fluid (FC) forming a portion of U-shaped or serpentine circuit, in which the two free ends of the two branches are fluidically linked to distribution/collection lines (5, 5'') forming part of a circuit (5) for supplying/discharging heat-transfer fluid (FC).

10. Battery unit according to any one of Claims 1 to 3, 6 and 7, **characterized in that** each surface element (7) with high thermal conductivity, in the form of a plate, is secured by mechanical fastening to the wall (3') of the housing (3), for example by heading, by snap-fitting, by crimping, by screwing or the like, the portion of wall (3') facing the surface element (7) constituting a surface element (9) with low thermal conductivity.

11. Battery unit according to any one of Claims 1 to 3, 6 and 7, characterized that in each surface element (7) with high thermal conductivity, in the form of a plate, comprises an edge zone forming a peripheral frame (13), made of a single piece or added by overmolding, secured by welding to the wall (3') of the housing (3), the portion of wall (3') facing the surface element (7) constituting a surface element (9) with low thermal conductivity.

12. Battery unit according to Claim 10 or 11, **characterized in that** a seal (14) is present, in the compressed state, between the mutually secured peripheral edges of the two surface elements (7 and 9).

13. Battery unit according to any one of Claims 1, 2, 5, 6 and 9 to 12, **characterized in that** each surface element (7) with high thermal conductivity and in the form of a plate is secured to a portion of the wall (3') of the housing (3) constituting a surface element (9) with low thermal conductivity, and is so secured in at least one bonding zone (15), preferentially a plurality of bonding zones (15) distributed regularly, each bonding zone (15) consisting of a local deformation (16), protruding toward the portion of wall (3'), of the surface element (7) in the form of a metal plate, said deformation (16) being overmolded by a material (16') compatible with the material of said portion of wall (3') for a bond by laser welding for example.

14. Battery unit according to any one of Claims 1 to 13, **characterized in that** one of the two facing surface elements (7 and 9), defining between them a volume (8) for circulation of heat-transfer fluid (FC) of a heat exchange zone (6'), advantageously of rectangular form, has a rib (17) subdividing said volume (8) into two branches of an elementary portion of U-shaped, S-shaped or serpentine circulation circuit 4'.

15. Battery unit according to any one of Claims 1 to 14, **characterized in that** the temperature regulation means (4, 5) comprise distribution (5')/collection (5'') ducts forming one or more circuits for supplying/discharging heat-transfer liquid fluid (LC), these ducts (5', 5'') being incorporated structurally in the housing (3), and secondary or tapping lines (18) linking said ducts (5', 5'') to the circulation volumes (8) of the heat exchange zones (6'), these ducts (5', 5'') and lines (18) being at least partially formed in a single piece with the wall (3') of the housing (3).

16. Battery unit according to Claim 15, **characterized in that** the tubular walls of the ducts (5', 5'') and of the lines (18) are formed, on the one hand, partially in and/or on the wall (3') of the housing (3), preferentially of generally substantially rectangular parallelepipedal form, and, on the other hand, partially by the overmolded material (23, 23') and/or portions of wall added and assembled by vibration welding or laser welding.

17. Battery unit according to either one of Claims 15 and 16, **characterized in that** the or each supply/discharge circuit (5) comprises a connection end-fitting (19) for the distribution duct or ducts (5') and a connection end-fitting (19') for the collection duct or ducts (5''), a common circuit (5) or separate circuits (5) being advantageously provided for the circulation volumes (8) of the heat exchange zones (6') present in the bottom tray (10) and the cover (11) which form the two constituent parts of the housing (3) .

18. Battery unit according to any one of Claims 1 to 17, **characterized in that** the tray (10) comprises a reinforcing structure incorporated in the body of the tray (10), for example overmolded by the thermoplastic material constituting the wall of said tray (10).

19. Battery unit according to any one of Claims 1 to 17, **characterized in that** the tray (10) comprises a reinforcing structure (20) cooperating externally, by conjugation of forms, with the thermoplastic wall of said tray (10), for example of frame type, notably providing a median and peripheral stiffening for said tray (10).

20. Battery unit according to any one of Claims 1 to 19, **characterized in that** the tray (10) comprises at least one subdividing internal wall (21), extending in a single piece from the bottom of the tray (10), advantageously cooperating with a reinforcing structure (20) and incorporating, if necessary, volumes (8) for circulation of heat-transfer fluid (FC), these volumes (8) preferentially forming part of the circulation means (4) of the tray (10) and fluidically linked to the distribution means (5).

21. Battery unit according to any one of Claims 1 to 20, **characterized in that** a means (22) for controlling the temperature, the circulation and/or the distribution of the heat-transfer liquid is incorporated structurally, even materially, at least partly in the housing (3).

22. Motor vehicle, in particular electric or hybrid, **characterized in that** it comprises at least one battery unit (1) according to any one of Claims 1 to 21, this battery unit (1) also comprising at least one internal temperature measurement means, means for electrically connecting the cells or elements (2) to one another and external connection means, the latter being advantageously partially formed with or in the wall (3') of the housing (3).
